# EUROPEAN PATENT SPECIFICATION

(11) **EP 1 741 017 B1**
(45) Date of publication and mention of the grant of the patent: **26.01.2011**
(21) Application number: 05732232.3
(22) Date of filing: 15.04.2005
(51) Int. Cl.: G05F 5/00, B60N 2/56

(54) **METHOD AND SYSTEM FOR TRANSMISSION OF INFORMATION**
VERFAHREN UND SYSTEM ZUR ÜBERTRAGUNG VON INFORMATIONEN
PROCEDE ET SYSTEME DE TRANSMISSION D'INFORMATIONS

(30) Priority: 16.04.2004 SE 0400978; 02.06.2004 US 521598 P
(43) Date of publication of application: 10.01.2007
(73) Proprietor: Kongsberg Automotive AB, 565 28 Mullsjö (SE)
(72) Inventor: FRISTEDT, Tommy, S-560 25 Bottnaryd (SE)
(74) Representative: Andersson, Per Rune
(86) International application number: PCT/SE2005/000544
(87) International publication number: WO 2005/101157

(56) References cited:
- WO-A1-98/01798
- WO-A1-99/46654
- DE-C1- 10 009 128
- US-A- 5 241 251

## Description

### TECHNICAL FIELD:

The present invention relates to a method for serial transmission of information between at least one transmitter and at least one receiver, with the said information being transferred by means of voltage pulses.

The invention also relates to a system comprising a control unit and at least one fan unit, which fan unit is arranged for ventilation of vehicle seats, with the control unit and the fan unit being arranged to communicate with each other by means of voltage pulses via a serial communication bus.

### BACKGROUND ART:

There is currently a need to communicate to and from an electric motor, that is to transmit, for example, control commands to a microcomputer located in the motor that is in contact with the motor and obtains, for example, error messages from this microcomputer. This applies, for example, to fan motors arranged in vehicles, more specifically fan motors arranged in ventilated seats in vehicles, in accordance with what is described below.

For reasons of comfort and safety, ventilated seats are currently used in vehicles. For this purpose, both the driver's seat and other vehicle seats can be provided with ventilation ducts that lead from a fan located in the vicinity of the seat to one or more openings in the seat. Such openings are normally located in the seat cushion, but can also be located in the back support. The fan can be arranged so that it either forces or extracts air. In this way, ventilation of the surface of the vehicle seat in question is made possible, which in turn provides an increased sensation of comfort for the,driver or passenger in the respective vehicle seat.

Patent DE10009128 C1 shows a fan for ventilation of vehicle seats, in which a control unit integrated in the fan unit, is supplied with control signals from an external control unit. The control unit integrated in the fan unit supplies, in turn, the fan motor with drive voltage on the basis of the control information received. This drive voltage for the fan motor reaches the control unit integrated in the fan unit via a separate supply lead for drive voltage.

A disadvantage of previously known technology for direct current motors, is that a lot of cabling is required in order to achieve both the transmission of signals and the transmission of power. There are also difficulties associated with the transmission of control signals, as digital information is transferred in the form of pulse trains where the pulses represent ones and zeros, and where a large number of pulse edges can cause both electromagnetic interference and mechanical interference to the controlled motor. In particular, there is a need to provide a communication protocol that gives an efficient and reliable transmission of information between a number of a central control unit and controlled units.

### DISCLOSURE OF INVENTION:

An object of the present invention is to provide an improved method and improved system for the transmission of information, for example in association with controlling a motor driven by direct current, by means of which the problems stated above can be solved.

This object is achieved by means of a method of the type mentioned in the introduction, which is **characterized in that** it comprises, in addition, the following steps: making an association between the information that is to be transferred and the time between two predetermined edge levels of a voltage pulse; generation of a voltage pulse in the transmitter with a time difference between the flank levels corresponding to the information that is to be transferred; and transmission of the voltage pulse from the said transmitter to the said receiver.

The object is also achieved by means of a system of the type mentioned in the introduction, which is **characterized in that** the time between two predetermined flank levels of a voltage pulse is variable.

By means of the invention, a method and a system are provided that give an efficient protocol for the transmission of information. In particular, the invention provides a rational and highly efficient system as far as cost is concerned, which still provides maximum performance, that is on a level with that provided by other more expensive systems.

In addition, the invention contributes to a reduction in problems relating to EMC (electromagnetic compatibility) by rationalizing and minimizing the number of pulses that are used for the said transmission of information.

### BRIEF DESCRIPTION OF DRAWINGS:

The invention will be described in detail in the following with reference to the attached drawings. These drawings are used only for the purpose of illustration, and are not to be regarded as limiting the present invention.
Figure 1 shows a perspective view of a vehicle seat with which the present invention can be used;
Figure 2 shows a diagram of a fan network;
Figure 3 shows a diagram of a fan unit;
Figure 4 shows an example of a communication pulse according to the invention;
Figure 5 shows an example of a communication pulse according to the invention; and
Figure 6 shows an example of a communication pulse train according to the invention.

### MODE(S) FOR CARRYING OUT THE INVENTION:

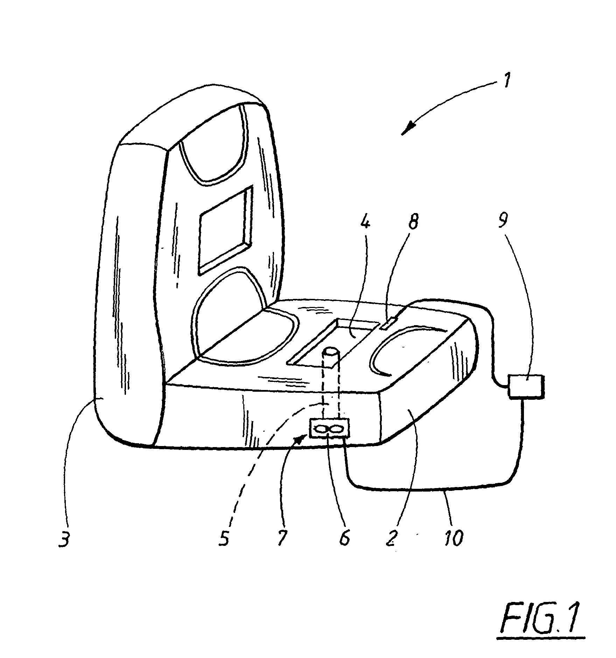

The following description exemplifies the present invention when it is used for a fan motor arranged for ventilation of a vehicle seat with reference first to Figure 1. This area of application is, however, not to be regarded as limiting the invention, which can be used for several different kinds of serial data communication.

For increased comfort, the seat cushion 2 and back support 3 of a vehicle seat 1 can be provided with ventilation and temperature control of the surfaces or areas on which a driver or passenger in the vehicle is expected to sit. The seat cushion 2 will be described in the following, but of course the corresponding considerations apply for the back support 3. In a vehicle, both the driver's seat and the other seats can be equipped with ventilation by forcing or extraction of air. The forced or extracted air is distributed via at least one opening 4 that is arranged in the seat cushion 2. In the case of forcing of air, this supplied air is taken through a duct 5 in the seat cushion 2 and out towards the person who is sitting on the seat in question, via the distributing opening 4. In the case of extraction of air, this extracted air is taken from the person who is sitting in the seat in question through the duct 5 in the seat cushion 2 via the distributing opening 4.

Forcing or extracting of air is preferably carried out by means of a fan 6 driven by a direct-current motor in a fan unit 7. In Figure 1, the actual motor for the fan 6 is not shown. By regulating the speed of the fan 6, a particular amount of air can be taken to or from the seat cushion 2. In this way, an accurately adjusted temperature can be obtained on the surface of the seat if a temperature sensor 8 arranged in the seat is arranged to communicate with a control unit 9 for controlling the fan 6 via a link 10, which control unit 9 is external in relation to the fan unit 7. The fact that the control unit 9 is external means that it is not arranged in the same physical casing or the like as the actual fan unit 7, but consists of a central control unit for the temperature control and ventilation of the seat 1 and is used for operation of the fan motor 8.

The control of the speed of the fan 8 is carried out, for example, by a supply of the PWM type (Pulse Width Modulation). By means of this, the fan is supplied with a pulse train generated in the first control unit 9, which means that during the pulse train's positive with-voltage phases, the fan 7 is with voltage, while during the pulse train's without-voltage phases, it is without voltage. Thus, during a supply period of the Pulse Width Modulated supply, the fan 7 obtains drive voltage from and including the rising edge up to and including the falling edge. The supply can be carried out with a frequency that lies within the range approx. 20 Hz - 200 kHZ, that is within a wide frequency range. It should, however, be noted that the invention is not limited to the supply having to be carried out at any particular frequency or within any particular frequency range. Other supply signals are also possible within the framework of the present invention, for example via any type of known voltage regulator.

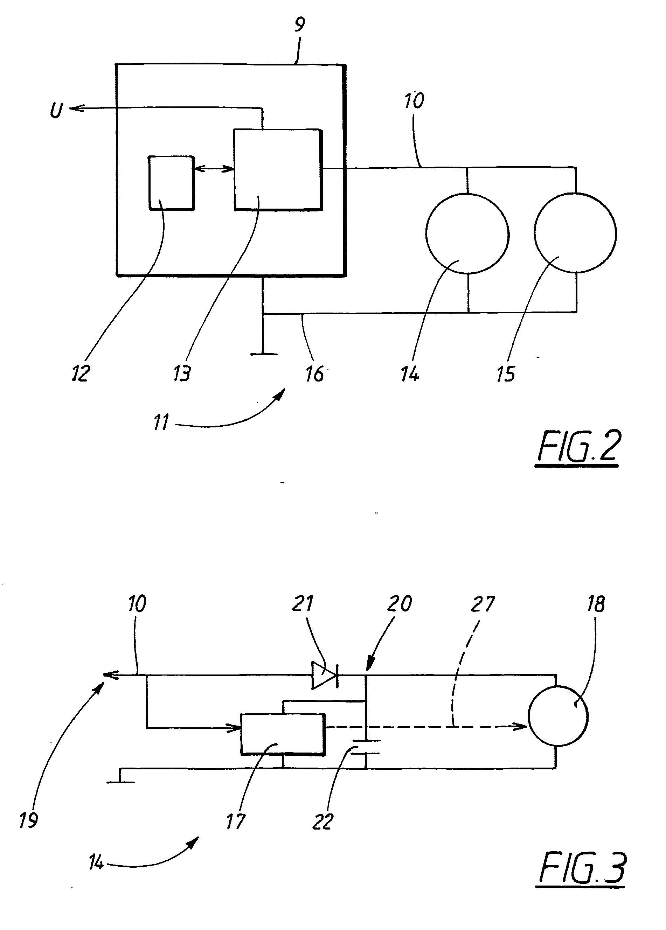

Figure 2 shows schematically a fan network 11 in which the present invention is used. The control unit 9 consists of a "master" unit comprising a first microcontroller 12 and a drive unit 13 arranged to drive two fan units 14, 15 which correspond to the fan unit with the reference numeral 7 in Figure 1. The drive unit 13 is connected to a drive voltage U. These fan units 14, 15 constitute "slave" units. The control unit 9 is connected to the fan units 14, 15 via the said link 10 that consists of a fan network bus. All the units are connected to a common earth potential 16.

A fan unit 14 will now be described in greater detail with reference to Figure 3. The fan unit 14 is essentially the same design as the fan unit 15 (cf. Figure 1). The fan unit 14 comprises a second microcontroller 17 and a fan motor 18 which are connected to the link 10 which defines a fan network bus. After the input 19 to the fan unit 14, the input signal is divided so that it goes both to the fan motor 18 and to the second microcontroller 17 comprised in the fan unit 14. At the supply input 20 of the fan motor 18, there is a diode 21 and stabilizing capacitor 22 that are intended to maintain the supply voltage to the fan motor 18, irrespective of the condition of the supply at the time. The diode 21 and the capacitor 22 also remove electrical interference that can prevent the second control unit 17 from reading information transmitted via the fan network bus 10.

The first microcontroller 12 is connected to the drive unit 13 and arranged to communicate with the drive unit 13 in order to be able to control this. By switching off the drive unit 13 for a certain period of time in order to achieve a voltage drop-out during this time, the first control unit 9 can communicate with the fan units by creating a negative pulse in this way. The communication is received by the second control unit 17 arranged in the respective fan unit 14, 15. The communication can also be carried out from the respective fan unit 14, 15 to the control unit 9 via the fan network bus 10. This communication will be described in greater detail below.

The nominal high level of the output signal of the drive unit 13 is thus at the same level as the supply voltage of the fan motor 18. When the output signal of the drive unit 13 has a low level, it corresponds approximately to the earth level in the system, being at least less than a predetermined limit value. By this means, as mentioned above, the said capacitor 22 maintains the supply voltage so that the fan motor 18 essentially receives a direct current supply.

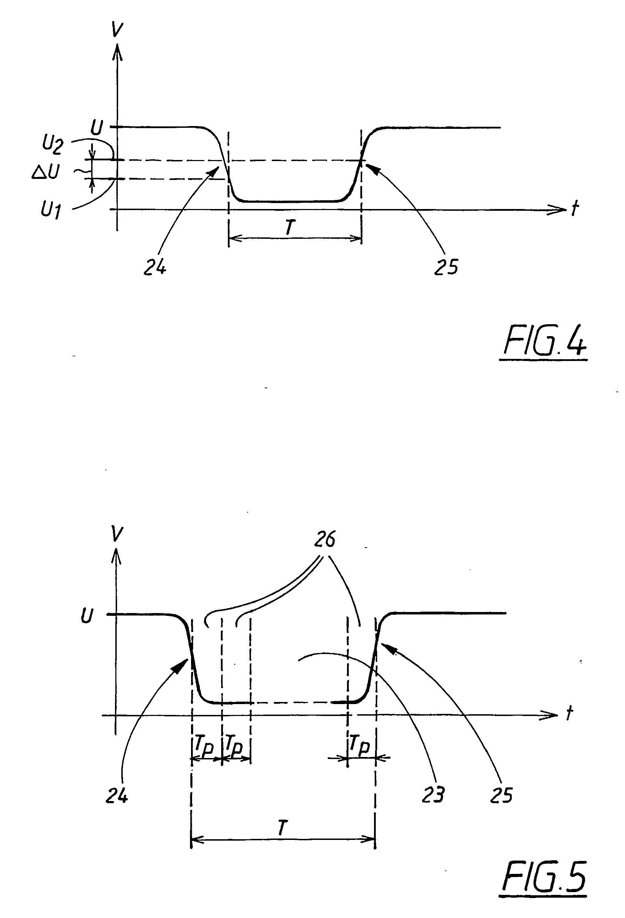

An object of the present invention is to minimize the number of pulses for the transmission of information between the control unit 9 and the fan units 14, 15. How this is carried out is described below, with reference also to Figure 4. By letting the time T for a negative pulse 23 be variable between a number of predetermined periods of time T, where each period of time T corresponds to a digital word, a digital word can be transmitted by only sending one pulse 23 and measuring the time between the limit values U₁ and U₂ of the edges 24, 25 of the pulse 23. The limit values U₁ and U₂ can be the same, or there can be a hysteresis ΔU. The length of the digital word is dependent upon how many unique periods of time T are defined in the system. Several consecutive negative pulses 23 at short intervals can define a longer digital word.

With reference now also to Figure 5, each negative pulse 23 that is sent from the control unit 9 to the relevant fan unit 14, 15 is preferably constructed of a number of basic pulses 26, where the duration Tₚ of a basic pulse is, for example 256 µS. A command can then be constructed of one, two or more consecutive basic pulses 26 in order to constitute a negative pulse of a certain duration depending upon what is to be communicated. The reading off by the second microcontroller 17 has been programmed with a tolerance range for interpreting the received pulse 23.

The limiting factor here is that the voltage drop-out must be of such a short duration that the relative effect on the fan motor 18 is small. The capacitor 22 in the fan unit 14, 15 has, as mentioned above, the function of stabilizing the drive voltage of the respective fan motor 18, for which reason the performance of the capacitor 22 is of significance for how long the periods with voltage drop-out (that is the negative pulses 23) can be. In addition, the resolution is also limiting, that is how small the time differences can be so that it is still possible to distinguish between the different unique periods of time for the negative pulses with an adequate margin of error.

By defining a number of unique periods of time T, consisting of a unique number of basic pulses 26, for the negative pulses, where each period of time T is allocated a special significance, a protocol for communication between control unit and fan units can be established. Such a protocol must be able, among other things, to handle addressing of the respective fan units. In the present example, there are two fan units 14, 15, each of which has a network address, which allows the control unit 9 to communicate with one fan unit 14, 15 at a time. The address is not allocated until after the unit 14, 15 in question has been mounted in the intended place, for which reason it does not initially have any address at all, but is allocated an address later, which address is stored in the second microcontroller 17, or, where such exists, in a separate memory in the fan unit 14, 15 (not shown). The address can then be changed if the need arises, for example, for service.

The respective fan unit 14, 15 is also arranged to communicate with the control unit 9 by creation of load pulses. These load pulses are communicated via the fan network bus 10 to the control unit 9. The load pulses are created by the second microcontroller 17 in the respective fan unit 14, 15 switching on the windings of the motor 18 in question via a link 27 between the second microcontroller 17 and the fan motor 18. The load pulses are then created by short commutations in order to create current pulses that can be detected in the corresponding control unit. This corresponds to the motor 18 consuming more current. This increase in current on the fan network bus 10 constitutes the said load pulses, which are detected by the drive unit 13 of the control unit 9. Communication from the respective fan unit 14, 15 to the control unit 9 is normally carried out only after an enquiry from the control unit 9, see the command examples below. On account of the commutation of the motor 18, communication from the respective fan unit 14, 15 to the control unit 9 can only take place when the fan motor 18 concerned is stationary. The commutation brings about current changes in the fan network bus 10, which are difficult to distinguish from load pulses. Thus, for example, error reports can not be sent to the control unit 9 from the fan unit in question 14, 15 as long as the fan motor 18 in question is activated. In such a case, error data is stored in a memory in the second microcontroller 17, or if such exists in a separate memory in the fan unit (not shown), and is sent as error status to the control unit 9 when the fan motor 18 in question stops.

Examples of commands from the control unit 9 to the fan unit 14, 15 without requiring a response from the fan unit 14, 15 are:
- Change fan speed
- Start fan
- Stop fan
- Change fan unit's address
- Resetting of error status

Examples of commands from the control unit 9 to the fan unit 14, 15 where a response is required from the fan unit 14, 15 are:
- Reading off of error status
- Reading off of distinguishing data

Reading off of so-called distinguishing data is only required when two "slave" units 14, 15 have been given the same address and must be distinguished in some other way. For example, a unique serial number can be stored in the second microcomputer 17 during manufacture of the fan unit 14, 15. Another possibility is for a unique random number to be generated in the second microcontroller 17 when reading off of distinguishing data is requested.

An example of a communication protocol with the functionality described above is shown below. Here the pulses correspond to two information bits, but these are combined in pairs in order to form digital words of four bits. This does not apply to "Start" and "Stop" which are in addition to the list below.

| Information transmitted | Number of basic pulses of 256 µS |
|---|---|
| Binary number 00 | 8 |
| Binary number 01 | 24 |
| Binary number 10 | 40 |
| Binary number 11 | 56 |
| Start | 72 |
| Stop | 88 |
| Transmission pause | ≥ 104 |

The meaning of the different digital words can be written in a separate table:

| Digital word | Meaning |
|---|---|
| 0000 | Speed of fan motor |
| 0001 | Speed of fan motor |
| 0010 | Speed of fan motor |
| 0011 | Speed of fan motor |
| 0100 | Speed of fan motor |
| 0101 | Speed of fan motor |
| 0110 | Speed of fan motor |
| 0111 | Speed of fan motor |
| 1000 | Change address of "slave" |
| 1001 | Reset error status |
| 1010 | Read error status |
| 1011 | Read distinguishing data |
| 1100 | Not used |
| 1101 | Not used |
| 1110 | Not used |
| 1111 | Not used |

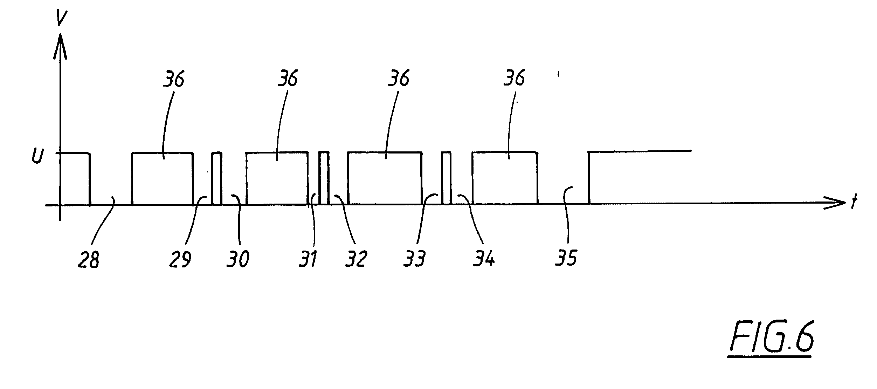

An example of a communicated sequence from the control unit 9 to a fan unit 14, 15 is shown in Figure 6. The pulse 28 is a start pulse consisting of 72 basic pulses, the pulses 29, 30 thereafter give the address of the required "slave" unit. The pulses 31, 32 consisting of 24 and 40 basic pulses respectively, send the digital word 0110, which is a specific fan speed. The pulses 33, 34 each consisting of 40 basic pulses, send the digital word 1010, which means that the error status is to be read off. The pulse 35 is a stop pulse consisting of 88 basic pulses, which means that this transmission to the "slave" in question is over. The pulse distances 36 exceed 104 basic pulses, for which reason these delimit each word that is transmitted.

The invention is not limited to the embodiments described above, but can be varied freely within the framework of the following patent claims. For example, it can be utilized freely for all kinds of serial communication between a transmitter and a receiver, in particular where there is a need to reduce the number of pulses transmitted.

## Claims

1. Method for the serial transmission of information between at least one transmitter (7, 9, 14, 15) and at least one receiver (7, 9, 14, 15), with the said information being transferred by means of voltage pulses (23), said method comprising the steps:
making an association between the information that is to be transferred and the time (T) between two predetermined flank levels (U₁, U₂) of a voltage pulse;
generation of a voltage pulse in the transmitter with a time difference between the flank levels (U₁, U₂) corresponding to the information that is to be transferred; and
transmission of the voltage pulse from the said transmitter to the said receiver; **characterized in that** said voltage pulses (23) are comprised in a drive voltage (U), and **in that** said method furthermore comprises transmission of information to two or more receivers with one receiver being addressed at a time.

2. Method according to claim 1, **characterized in that** the time (T) between two predetermined flank levels (U₁, U₂) of a voltage pulse (23) is variable.

3. Method according to claim 1 or 2, **characterized in that** the time (T) between the two predetermined flank levels (U₁, U₂) of the voltage pulse (23) varies in predetermined steps (Tp).

4. Method according to any of the preceding claims, **characterized in that** the communication between transmitter (7, 9, 14, 15) and receiver (7, 9, 14, 15) comprises changing the address of the receiver (7, 9, 14, 15).

5. Method according to any one of the preceding claims, **characterized in that** it is arranged to control an electric motor (18).

6. Method according to claim 5, **characterized in that** it is utilized to control an electric motor (18) which consists of a fan motor arranged for ventilation of vehicle seats (1).

7. System comprising a at least one transmitter (9, 7, 14,15) and at least one receiver (9, 7, 14, 15), in which said transmitter (9, 7, 14, 15) and said receiver (9, 7, 14, 15) are arranged to communicate with each other by means of voltage pulses (23) having flank levels (U₁, U₂), via a serial communication bus (10), where a time difference between the flank levels (U₁, U₂) corresponds to the information that is to be transferred, **charact erized in that** said voltage pulses (23) are comprised in a drive voltage (U), and in that said system is arranged so that, when there are several receivers, one receiver can be addressed at a time.

8. A system according to claim 7, **characterized in that** said transmitter and said receiver are constituted by a corresponding control unit (9) and fan unit (7, 14, 15), which fan unit (7, 14, 15) is arranged for ventilation of vehicle seats, where said control unit (9) and said fan unit (7, 14, 15) each have both transmitter and receiver functionality and where said voltage pulses (23) are comprised in a drive voltage (U) for the fan unit (7, 14, 15).

9. A system according to claim 8, **characterized in that** the time (T) between two predetermined flank levels (U₁, U₂) of a voltage pulse (23) is variable.

10. System according to any one of claims 7-9, **characterized in that** the time (T) between the two predetermined flank levels (U₁. U₂) of the voltage pulse (23) varies in predetermined steps (Tp).

11. System according to any one of claims 7-10, **characterized in that** the communication between transmitter (7, 9, 14, 15) and receiver (7, 9, 14, 15) comprises changing the address of the receiver (7, 9, 14, 15).

## Patentansprüche

1. Verfahren für das serielle Übertragen von Information zwischen mindestens einem Übertrager (7, 9, 14, 15) und mindestens einem Empfänger (7, 9, 14, 15), wobei die Information mittels Spannungspulsen (23) übertragen wird, das Verfahren die Schritte umfassend:
Herstellen einer Assoziation zwischen der Information, die zu übertragen ist, und der Zeit (T) zwischen zwei vorbestimmten Flankenleveln (U₁, U₂) eines Spannungspulses;
Erzeugen eines Spannungspulses in dem Übertrager mit einer Zeitdifferenz zwischen den Flankenleveln (U₁, U₂) entsprechend der Information, die zu übertragen ist; und
Übertragen der Spannungspulse von dem Übertrager zu dem Empfänger, **gekennzeichnet dadurch, dass** die Spannungspulse (23) in einer Antriebsspannung (U) umfasst sind und **dadurch**, dass das Verfahren ferner umfasst Übertragen von Information zu zwei oder mehr Empfängern, wobei ein Empfänger zu einer Zeit adressiert wird.

2. Verfahren nach Anspruch 1, **dadurch gekennzeichnet, dass** die Zeit (T) zwischen zwei vorbestimmten Flankenleveln (U₁, U₂) eines Spannungspulses (23) variabel ist.

3. Verfahren nach Anspruch 1 oder 2, **dadurch gekennzeichnet, dass** die Zeit (T) zwischen den zwei vorbestimmten Flankenleveln (U₁, U₂) des Spannungspulses (23) in vorbestimmten Schritten (Tₚ) variiert.

4. Verfahren nach einem der vorangegangenen Ansprüche,
**dadurch gekennzeichnet, dass** die Kommunikation zwischen Übertrager (7, 9, 14, 15) und Empfänger (7, 9, 14, 15) umfasst Ändern der Adresse des Empfängers (7, 9, 14, 15).

5. Verfahren nach einem der vorangegangenen Ansprüche,
**dadurch gekennzeichnet, dass** es eingerichtet ist, um einen elektrischen Motor (18) zu steuern.

6. Verfahren nach Anspruch 5, **dadurch gekennzeichnet, dass** es verwendet wird, um einen elektrischen Motor (18) zu steuern, welcher aus einem Lüftermotor besteht, welcher eingerichtet ist zum Belüften eines Fahrzeugsitzes (1).

7. System umfassend mindestens einen Übertrager (9, 7, 14, 15) und mindestens einen Empfänger (9, 7, 14, 15), in welchem der Übertrager (9, 7, 14, 15) und der Empfänger (9, 7, 14, 15) eingerichtet sind, um miteinander mittels Spannungspulsen (23), die Flankenlevel (U₁, U₂) aufweisen, über einen seriellen Kommunikationsbus (10) zu kommunizieren, wobei eine Zeitdifferenz zwischen den Flankenleveln (U₁, U₂) der Information, die zu übertragen ist, entspricht, **dadurch gekennzeichnet, dass** die Spannungspulse (23) in einer Antriebsspannung (U) umfasst sind, und **dadurch**, dass das System eingerichtet ist, so dass, wenn es mehrere Empfänger gibt, ein Empfänger zu einer Zeit adressiert werden kann.

8. System nach Anspruch 7, **dadurch gekennzeichnet, dass** der Übertrager und der Empfänger gebildet sind durch eine entsprechende Steuereinheit (9) und eine Lüftereinheit (7, 14, 15), welche Lüftereinheit (7, 14, 15) eingerichtet ist zum Belüften eines Fahrzeugsitzes, wobei die Steuereinheit (9) und die Lüftereinheit (7, 14, 15) jeder beides, Übertrager und Empfänger, funktional aufweisen und wobei die Spannungspulses (23) in einer Antriebsspannung (U) für die Lüftereinheit (7, 14, 15) umfasst sind.

9. System nach Anspruch 8, **dadurch gekennzeichnet, dass** die Zeit (T) zwischen zwei vorbestimmten Flankenleveln (U₁, U₂) eines Spannungspulses (23) variabel ist.

10. System nach einem der Ansprüche 7 bis 9, **dadurch gekennzeichnet, dass** die Zeit (T) zwischen den zwei vorbestimmten Flankenleveln (U₁, U₂) des Spannungspulses (23) in vorbestimmten Schritten (Tₚ) variiert.

11. System nach einem der Ansprüche 7 bis 10, **dadurch gekennzeichnet, dass** die Kommunikation zwischen dem Übertrager (7, 9, 10, 15) und Empfänger (7, 9, 14, 15) umfasst Ändern der Adresse des Empfängers (7, 9, 14, 15).

## Revendications

1. Procédé pour la transmission série d'informations entre au moins un émetteur (7, 9, 14, 15) et au moins un récepteur (7, 9, 14, 15), lesdites informations étant transférées au moyen d'impulsions de tension (23), ledit procédé comprenant les étapes consistant à :
établir une association entre les informations qui doivent être transférées et le temps (T) entre deux niveaux de front (U₁, U₂) prédéterminés d'une impulsion de tension ;
générer une impulsion de tension dans l'émetteur avec une différence de temps entre les niveaux de front (U₁, U₂) correspondant aux informations qui doivent être transférées ; et
transmettre l'impulsion de tension dudit émetteur audit récepteur ; **caractérisé en ce que** lesdites impulsions de tension (23) sont comprises dans une tension de commande (U), et **en ce que** ledit procédé comprend en outre la transmission d'informations à deux récepteurs ou plus, un récepteur à la fois étant adressé.

2. Procédé selon la revendication 1, **caractérisé en ce que** le temps (T) entre deux niveaux de front (U₁, U₂) prédéterminés d'une impulsion de tension (23) est variable.

3. Procédé selon la revendication 1 ou 2, **caractérisé en ce que** le temps (T) entre les deux niveaux de front (U₁, U₂) prédéterminés de l'impulsion de tension (23) varie par pas (T_{P}) prédéterminés.

4. Procédé selon l'une quelconque des revendications précédentes, **caractérisé en ce que** la communication entre l'émetteur (7, 9, 14, 15) et le récepteur (7, 9, 14, 15) comprend la modification de l'adresse du récepteur (7, 9, 14, 15).

5. Procédé selon l'une quelconque des revendications précédentes, **caractérisé en ce qu'**il est agencé pour commander un moteur électrique (18).

6. Procédé selon la revendication 5, **caractérisé en ce qu'**il est utilisé pour commander un moteur électrique (18) qui consiste en un moteur de ventilateur agencé pour la ventilation de sièges de véhicule (1).

7. Système comprenant au moins un émetteur (9, 7, 14, 15) et au moins un récepteur (9, 7, 14, 15), dans lequel ledit émetteur (9, 7, 14, 15) et ledit récepteur (9, 7, 14, 15) sont agencés pour communiquer l'un avec l'autre au moyen d'impulsions de tension (23) ayant des niveaux de front (U₁, U₂), par l'intermédiaire d'un bus de communication série (10), où une différence de temps entre les niveaux de front (U₁, U₂) correspond aux informations qui doivent être transférées, **caractérisé en ce que** lesdites impulsions de tension (23) sont comprises dans une tension de commande (U), et **en ce que** ledit système est agencé de sorte que, lorsqu'il y a plusieurs récepteurs, un récepteur à la fois puisse être adressé.

8. Système selon la revendication 7, **caractérisé en ce que** ledit émetteur et ledit récepteur sont constitués par une unité de commande (9) et une unité de ventilateur (7, 14, 15) correspondantes, laquelle unité de ventilateur (7, 14, 15) est agencée pour ventiler des sièges de véhicule, où ladite unité de commande (9) et ladite unité de ventilateur (7, 14, 15) ont chacune une fonctionnalité à la fois d'émetteur et de récepteur, et où lesdites impulsions de tension (23) sont comprises dans une tension de commande (U) pour l'unité de ventilateur (7, 14, 15).

9. Système selon la revendication 8, **caractérisé en ce que** le temps (T) entre deux niveaux de front (U₁, U₂) prédéterminés d'une impulsion de tension (23) est variable.

10. Système selon l'une quelconque des revendications 7 à 9, **caractérisé en ce que** le temps (T) entre les deux niveaux de front (U₁, U₂) prédéterminés de l'impulsion de tension (23) varie par pas (T_{P}) prédéterminés.

11. Système selon l'une quelconque des revendications 7 à 10, **caractérisé en ce que** la commmunication entre l'émetteur (7, 9, 14, 15) et le récepteur (7, 9, 14, 15) comprend la modification de l'adresse du récepteur (7, 9, 14, 15).
